# EUROPEAN PATENT SPECIFICATION

(11) **EP 3 426 530 B1**
(45) Date of publication and mention of the grant of the patent: **17.02.2021**
(21) Application number: 17712674.5
(22) Date of filing: 13.03.2017
(51) Int. Cl.: B60S 3/04

(54) **DUAL SCRUBBER VEHICLE TREATMENT BRUSH ASSEMBLY**
FAHRZEUGBEHANDLUNGSBÜRSTENANORDNUNG MIT ZWEI BÜRSTEN
ENSEMBLE DE BROSSES DE TRAITEMENT DE VÉHICULE À DOUBLE BROSSEUSE

(30) Priority: 11.03.2016 US 201615067423
(43) Date of publication of application: 16.01.2019
(73) Proprietor: BELANGER, INC., Hamilton, OH 45011 (US)
(72) Inventor: BELANGER, Michael, J., Northville MI 48167 (US); KOTRYCH, Jerry, A., Livonia MI 48150 (US); TOGNETTI, David, L., Howell MI 48843 (US)
(74) Representative: Monzón de la Flor, Luis Miguel
(86) International application number: PCT/US2017/022066
(87) International publication number: WO 2017/156524

(56) References cited:
- US-A1- 2015 274 137

## Description

### CROSS-REFERENCE TO RELATED APPLICATIONS

### TECHNICAL FIELD

The present disclosure relates generally to a vehicle treatment apparatus for treating an exterior surface of a vehicle. More specifically, the present disclosure relates to a rotary brush assembly for treating an exterior surface of a vehicle that utilizes wash media elements in combination with a supply of high pressure fluid to more effectively clean a vehicle exterior, including areas that are typically difficult to clean effectively.

### BACKGROUND OF THE INVENTION

Typical vehicle wash systems utilize a variety of vehicle treatment components, including different types of rotary brushes, miter curtains and the like to help remove dirt from a vehicle exterior as part of the wash process. These vehicle wash systems also generally include a high pressure rinse arch to spray water onto the vehicle to help loosen any dirt accumulated thereon. However, the high pressure water is generally emitted from a location disposed away from a vehicle and thus is not completely effective in removing dirt from the vehicle exterior. As such, most vehicle wash facilities include manual washing of the vehicle exterior as a first step in the wash process, including wheels, rocker panels, bumpers and other notoriously hard to clean surfaces to help loosen dirt accumulated thereon so that the wash process may be more effective. Additionally, these systems also generally include nozzles for emitting soap and other chemicals onto the vehicle exterior at various stages of the wash process to assist with the cleaning process as well as to help minimize damage to the vehicle exterior by ensuring that the wash media elements associated with the various vehicle treatment components do not contact a dry vehicle surface. These systems also generally include one or more dryers that are designed to remove excess water from the vehicle surface at the conclusion of the wash process.

A common type of rotary brush apparatus frequently used in these vehicle wash systems include a plurality of media elements that contact, scrub, and clean exterior surfaces of vehicles. These rotary brushes typically include a rotary hub portion with an axis of rotation that is oriented parallel to a vehicle exterior. As the rotary hub is driven about its axis of rotation, the plurality of media elements blossom generally outward (perpendicular with respect to the axis of rotation) due, in part, to centrifugal force, so that they can contact a vehicle exterior to remove dirt and debris and effectuate cleaning. To apply increased scrubbing and cleaning, the rotary hub can be rotated faster to increase the speed at which the media elements contact the vehicle exterior. This generally creates an increased slapping noise due to an increased force of contact between the media elements and the vehicle exterior, which can make the car wash experience unenjoyable for a user. Also, as the speed of the brush increases, the perception of potential damage to the vehicle exterior increases.

These rotary brush apparatuses are generally configured such that the media elements are oriented generally perpendicular to the brush axis of rotation during use. As such, as the rotary hub is driven, the media elements typically only contact the vehicle exterior in a single direction, which limits the cleaning capabilities of the media elements and thus the effectiveness of the wash process. For example, with respect to a conventional side brush apparatus, as the hub rotates, the media elements are configured to contact a side exterior surface of the vehicle in only one direction, i.e., a front to back direction. In other words, the media elements contact a forward part of the exterior surface and move backward along the vehicle exterior before losing contact therewith. As such, any force applied to the vehicle exterior to remove dirt and debris is applied on only a single direction. These rotary brushes are known to have limitations in removing dirt from angled, curved or complex vehicle surfaces, such as wheels or rocker panels.

Rotary brushes having an axis of rotation which is oriented generally perpendicular to a vehicle exterior are also known, for cleaning vehicle wheels. However, these brushes employ hard or rigid media elements, such as synthetic bristles. As the bristles can mar a painted surface, they are not suitable for cleaning or treating a vehicle exterior. Moreover, these rotary brush assemblies also include a rigid hub or backing portion. Thus, if the media elements secured to these rigid structures encounter angled or curved exterior vehicle surfaces, the brush assemblies cannot accommodate these variations and thus are not suitable for use for cleaning a vehicle exterior for this additional reason.

It would therefore be desirable to provide a rotary brush assembly that yields improvements over these deficiencies.

### SUMMARY OF THE INVENTION

It is therefore an aspect of the present disclosure to provide a rotary brush assembly for a vehicle wash system that can provide improved cleaning of a vehicle exterior surface.

It is another aspect of the present disclosure to provide a rotary brush assembly for a vehicle wash system that more effectively removes drift from hard to clean surfaces of a vehicle exterior, including wheels, rocker panels, and lower portions of doors and fenders.

It is still another aspect of the present disclosure to provide a rotary brush assembly that decreases the number of components required in a vehicle wash system to clean a vehicle exterior,

It is still a further aspect of the present disclosure to provide a rotary brush assembly for a vehicle wash system that utilizes a high pressure fluid to assist in removing dirt during a vehicle wash process.

In accordance with the above and the other aspects, a rotary brush assembly for a vehicle wash system is provided according to claim 1.

### BRIEF DESCRIPTION OF THE DRAWINGS

Other aspects of the present disclosure will be readily appreciated, as the same becomes better understood by reference to the following detailed description when considered in connection with the accompanying drawings wherein:
FIG 1 is a schematic illustration of a vehicle approaching a pair of vehicle treatment brush assemblies disposed adjacent a vehicle treatment area according to an aspect of the disclosure;
FIG 2 is a schematic illustration of the pair of vehicle treatment brush assemblies of FIG 1 spraying water onto a front end of the vehicle as it enters their treatment area according to an aspect of the disclosure;
FIG 3 is a schematic illustration of the pair of vehicle treatment brush assemblies of FIG 1 engaging and treating front side portions of the vehicle according to an aspect of the disclosure;
FIG 4 is a schematic illustration of the pair of vehicle treatment brush assemblies of FIG 1 engaging and treating opposing side surfaces of the vehicle according to an aspect of the disclosure;
FIG 5 is a schematic illustration of the pair of vehicle treatment brush assemblies of FIG 1 engaging and treating opposing rear surfaces of the vehicle according to an aspect of the disclosure;
FIG 6 is a perspective view of a vehicle treatment brush assembly for a vehicle wash system according to an aspect of the disclosure;
FIG 7 is a front view of a vehicle treatment brush assembly emitting a plurality of streams of high velocity water according to an aspect of the disclosure;
FIG 8 is a broken away view illustrating the inner workings of a vehicle treatment brush assembly according to an aspect of the disclosure;
FIG 9 is a schematic illustration of a shaft assembly for a vehicle treatment brush assembly according to an aspect of the disclosure;
FIG 10 is a front view of nozzle adaptor for attachment to a shaft assembly of a vehicle treatment brush assembly according to an aspect of the disclosure;
FIG 11 is a front view of a flexible wash media assembly for a vehicle treatment brush assembly according to an aspect of the disclosure;
FIG 12 is a cross-sectional view of the flexible wash media assembly of FIG 11 along the line A-A;
FIG 13 is a side view of a vehicle treatment brush assembly in a first position as a part of a vehicle wash system in accordance with another aspect of the disclosure; and
FIG 14 is a perspective view of a vehicle treatment brush assembly in a second position as part of a vehicle wash system in accordance with another aspect of the disclosure.

### DETAILED DESCRIPTION OF THE INVENTION

Referring to the FIGs which illustrate a vehicle treatment brush assembly 10 according to an aspect of the present disclosure. The vehicle treatment brush assembly 10 may be utilized as part of a vehicle wash system. The vehicle wash system may be configured as a tunnel car wash, where a vehicle is conveyed through the wash process by a conveyor or the like as is known in the art. Alternatively, the vehicle wash system may be configured as a roll-over type where the vehicle remains stationary and the various treatment components are translated and moved with respect to the vehicle to perform the vehicle wash process. Other suitable wash processes and systems may also be employed as are known. It will be appreciated that the disclosed treatment brush assembly could also be employed in connection with a variety of other applications outside of a vehicle wash system, such as a manual or self-serve wash process or in applications unrelated to the wash industry.

According to an aspect, the vehicle wash system may be housed within a vehicle wash facility having an entrance end where a vehicle enters, an exit end where the vehicle leaves, and a vehicle treatment area **12** therebetween. According to an aspect, the system can include a plurality of other treatment components disposed adjacent the vehicle treatment area **12** for engaging and/or treating an exterior surface of the vehicle as it passes through the vehicle wash system. For example, the treatment components can include a rinse arch, which sprays water onto a vehicle and/or a bubble device that generates bubbles and emits them directly onto a vehicle exterior. Other components may include one or more top brushes for contacting a top exterior surface of a vehicle, a plurality of side brushes for contacting side exterior vehicle surfaces, and a plurality of wrap brushes for contacting front and back surfaces of a vehicle. Another component may include wheel scrubbers for engaging vehicle wheels. Drying components for removing excess water from the vehicle exterior can also be employed. According to a further aspect, the system can include a wheel polishing device for treating vehicle wheels. It will be appreciated that more, less or different wash components may be employed. Additionally, multiples of the same components may be employed as part of a wash system as desired. Further, the components may take on a variety of different configurations. Moreover, the order, placement and sequence of the components within the system may also vary.

According to an aspect, the present disclosure relates to a rotary brush assembly for treating an exterior painted surface of a vehicle, such as compound or complex surfaces. The assembly is also well suited for treating vehicle wheels. With reference generally to the FIGs, the vehicle brush assembly **10** may be disposed adjacent the vehicle treatment area **12** to engage lower portions of a vehicle **14**, According to an aspect, the brush assembly **10** may be configured to engage exterior vehicle surfaces that may be known to be difficult to clean, including wheels and rocker panels. However, it will be appreciated that the vehicle brush assembly **10** may be configured to engage a variety of other vehicle surfaces as desired.

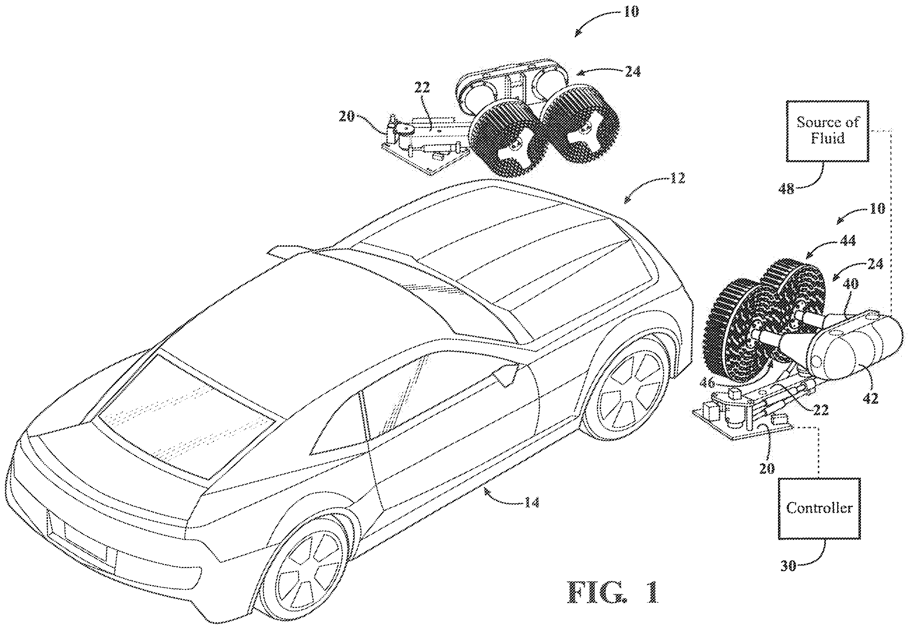

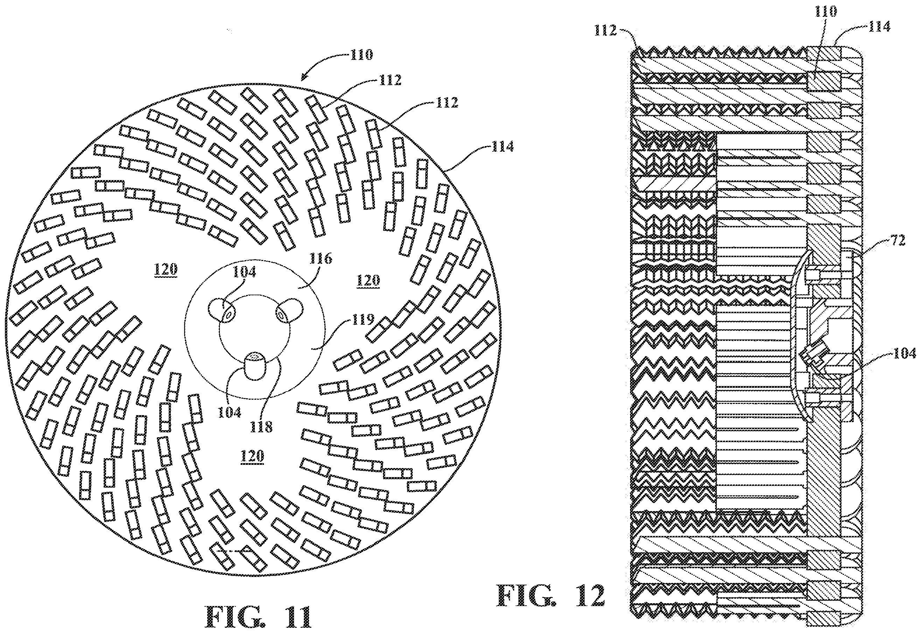

According to the invention, and with specific reference to FIGs 1 and 6 through 12, the brush assembly **10** includes a base portion **20**, a linkage arm portion **22,** and a treatment portion **24**. According to an aspect, the base portion **20** may be configured to engage a floor or other surface in a vehicle wash facility to support the assembly **10**. The base portion **20** may be constructed of a metal material such as steel or aluminum and may be powder coated, painted or otherwise shielded from corrosion. The base portion **20** may alternatively be constructed of a variety of other suitable materials. The base portion **20** may be rectangular-shaped and bolted or otherwise secured to the floor to keep the assembly **10** firmly in place for proper treatment of a vehicle. It will be appreciated that the base portion **20** may be secured to a variety of different surfaces within the vehicle wash facility, in a variety of suitable ways and may have a variety of other shapes.

According to an aspect, the linkage arm portion **22** may have a first end **26** that pivotally engages the base portion **20**. The linkage arm portion **22** may include a second end **28** that pivotally engages the treatment portion **24.** According to an aspect, the assembly 10 is in communication with a controller **30,** which effectuates control there over to direct its movement and operation. According to an aspect, the controller **30** directs movement of the linkage arm portion **22** in order to extend the treatment portion 24 toward a first position where it engages the vehicle treatment are **12** and can communicate with a vehicle **14.** The controller **30** can also retract the treatment portion **24** toward a second position disposed away from the vehicle treatment area **12** to prevent engagement with a vehicle **14**. It will be appreciated that the controller 30 may be configured to control other components and features within the vehicle wash system. According to a further aspect, the treatment portion **24** may be secured to the second end **28** of the linkage arm portion such that it is biased at an angle with respect to the direction of travel of the vehicle, as discussed in more detail herein.

According to an aspect, the linkage arm portion **22** may include a rail portion **32** that extends between the first end **26** and the second end **28.** The linkage arm portion **22** can also include a pair of cylinders **34** disposed on and connected to either side of the rail portion **32.** The cylinders **34** may be in communication with the controller **30** to effectuate pivotal movement of the rail portion **32** so as to move the treatment portion **24** toward and away from the vehicle treatment area **12** generally between the first position and the second position. According to a further aspect, the cylinders **34** may be configured to bias the treatment portion **24** toward the vehicle treatment area **12** in order to maintain pressure on the vehicle **12** in the first positon. According to an aspect, the treatment portion **24** may be pivotally attached to the rail portion **32** by at least one swivel mount **36**. It will be appreciated that multiple swivel mounts may alternatively be employed. Additionally, a variety of other suitable attachment methods/mechanism may be employed. The linkage arm portion 22 may be formed of steel, aluminum, plastic or a variety of other suitable materials.

According to an aspect, the treatment portion **24** can include a back plate portion **40**, a cover portion **42,** a first brush assembly **44,** and a second brush assembly **46**. According to an aspect, the first brush assembly **44** and the second brush assembly **46** may have the same components and thus the description of one of the assemblies will apply equally to the other. According to a further aspect, there are some differences in the brush assemblies that will be identified and described herein. According to an aspect, the first brush assembly **44** and the second brush assembly **46** may be individually supported on the back plate portion **40** such that they are oriented generally parallel to the ground. Additionally, the treatment portion **24** may be in communication with a source of fluid **48**. According to an aspect, the source of fluid **48** may be in communication with a high pressure inlet **50** associated with the assembly **10** by way of various fluid lines so that fluid may be delivered to the assembly **10**. Fluid that enters the high pressure inlet **50** may be in communication with high pressure fluid lines **52, 54, 56** so that fluid may be delivered to a fluid inlet **58** of the first brush assembly **44** and a fluid inlet **60** of the second brush assembly **46**. According to an aspect, the source of fluid **48** can be water or a combination of soap and water. It will be appreciated that a variety of other suitable fluids, including suitable chemicals may alternatively be employed.

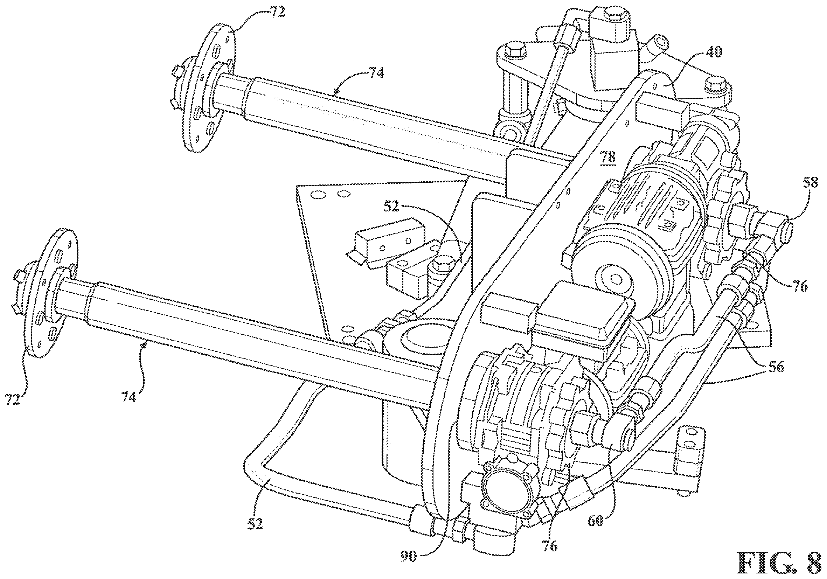

With reference to FIGs 8 through 12, the first brush assembly **44** can include a brush portion **70**, a nozzle adapter **72**, a shaft portion **74,** and a motor portion **76**. According to an aspect, the motor portion **76** may be in communication with the shaft portion **74** to effectuate rotation of the brush portion **70**, as discussed in more detail herein. According to an aspect, the motor portion **76** may be a gear motor. It will be appreciated, however, that a variety of other suitable motor types or drive mechanism may be employed. According to a further aspect, the motor portion **74** may be secured to an outboard side **78** of the back plate portion **40**. The motor potion **74** may be secured to the black plate portion **40** by an attachment mount **60**. According to an aspect, the first brush assembly **44** and the second brush assembly **46** may be directed to rotate in opposite directions to provide improved cleaning capabilities. It will also be appreciated that more or less brush assemblies may be employed. According to a still further aspect, the brush portion **70** may be of a non-rotating type that is in communication with a movement mechanism to move the brush portion **70** laterally with respect to a surface of a vehicle.

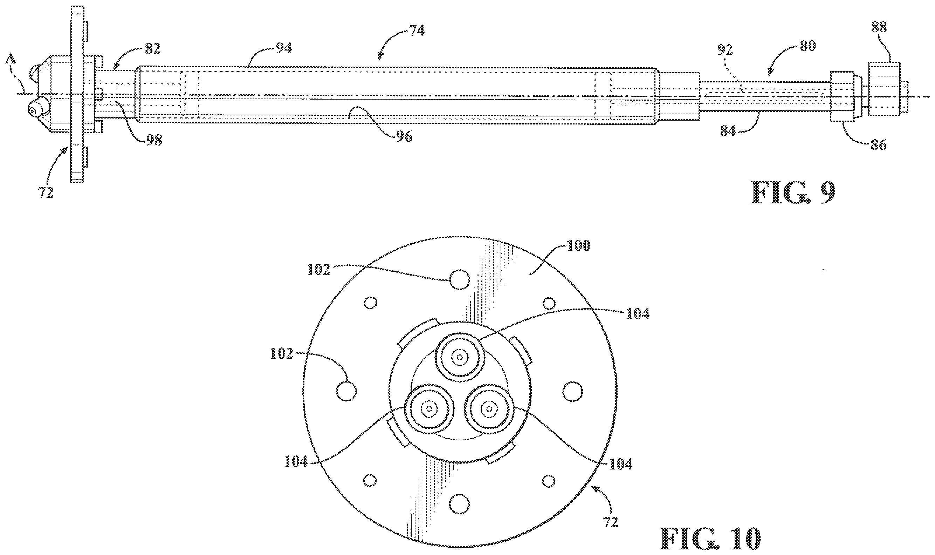

With reference to FIGs 8 and 9, the shaft portion **74** may include a first end portion **80** and a second end portion **82**. According to an aspect, the first end portion **80** can include a keyway portion **84** for being received within and engaging the motor portion **76** to effectuate rotation of the shaft portion **74** around an axis of rotation A. The first end portion **80** can also include a securing mechanism **86** for securing the shaft portion **74** to the motor portion **76** to maintain engagement thereof. According to a further aspect, the first end portion **80** can also include a swivel connection **88** with the fluid line **56** to allow for delivery of fluid to the fluid inlet **58** while the shaft portion **74** rotates. A variety of other suitable connectors between the shaft portion **74** and the fluid line **56** may also be employed. According to an aspect, the first end portion **80** may pass through an opening **90** in the back plate portion **40** for engagement with the motor portion **76**.

According to an aspect, the keyway portion **84** can include an interior passageway **92** for conveying fluid from the fluid inlet **58** to the brush portion **70**. According to a further aspect, the shaft portion **74** can include a hollow sleeve portion **94** disposed around an inner rotating portion **96**. The hollow sleeve portion **94** may be in communication with the interior passageway **92** such that the high pressure fluid can be conveyed to the second end portion **82** of the shaft portion **74.** The second end portion **82** can also include a fluid passage **98** that is in communication with the nozzle adapter **72,** which may be secured to the second end portion **82** of the shaft portion **74** to allow fluid to be conveyed therethrough. It will be appreciated that the nozzle adapter **72** may be secured to the shaft portion **74** in a variety of suitable ways.

According to an aspect and as best shown in FIG 10, the nozzle adapter **72** can be configured as a generally circular plate with a plurality of mounting holes **102** to allow attachment of the brush portion **70** thereto. According to a further aspect, the nozzle adapter **72** can include a plurality of high pressure spray nozzles **104** that are in communication with the fluid passage **98** so as to receive fluid from the fluid source **48**. As shown, three high pressure spray nozzles may be employed. However, more or less spray nozzles may be employed as desired. According to the invention, the spray nozzles **104** are angled outwardly such that fluid is emitted at an outward angle or away from the axis of rotation A. The angle at which the spray nozzles 104 are oriented may vary. The spray nozzles **104** may be configured to emit a stream of fluid on an arc as shown

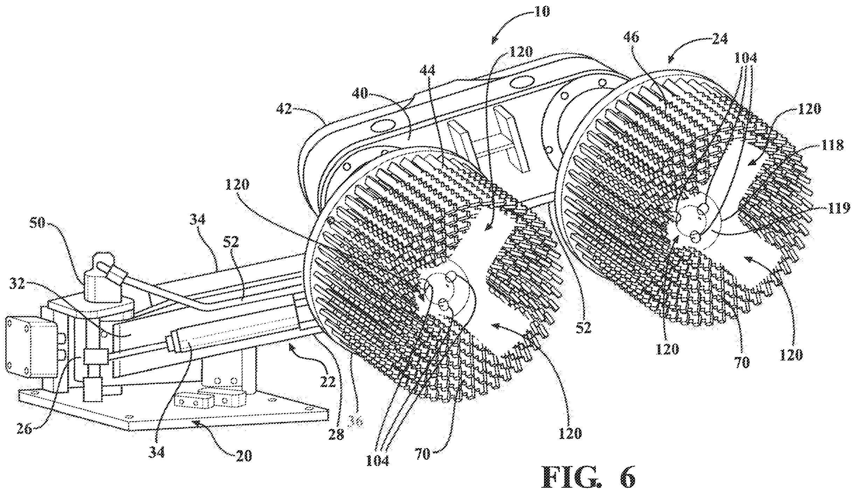

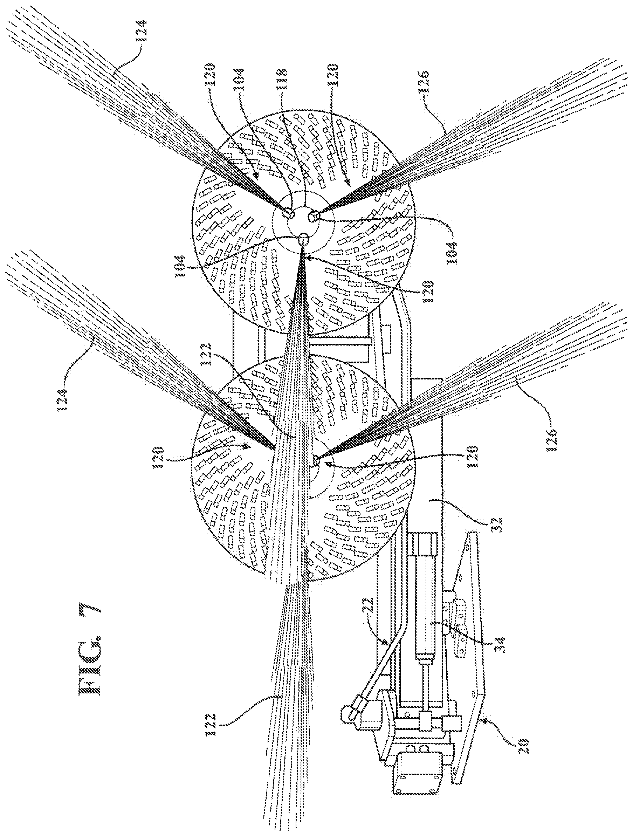

With reference to FIGs 6 and 7, the brush portion **70** may be disposed at the second end **82** of the shaft portion **74**. According to the invention, the brush portion **70** includes a backing member **110** and a plurality of wash media elements **112** secured to the backing member **110**. The backing member **110** may be secured to a front face **100** of the nozzle adapter **72** by securing it to the mounting holes **102** via a plurality of fasteners such that the backing member **110** can rotate as the shaft portion **74** rotates. It will be appreciated that a variety of suitable fasteners may be employed. It will also be appreciated that any number of mounting holes may also be employed.

According to an aspect, the backing member **110** may be formed of a soft flexible or pliable material such that it can move or flex to accommodate different vehicle contours or features during operation, such as corners, curves, tight areas and/or other complex surfaces. According to an aspect, the flexibility of the backing member **110** can provide significantly improved cleaning of a vehicle exterior during a vehicle wash process by providing more consistent contact between the wash media elements **112** and the vehicle exterior. According to another aspect, the backing member **110** can be formed of a material that has memory. In other words, the backing member **110** can be formed of a material that can move from a starting position, but has memory to return to its original position after it has been displaced. According to an aspect, as some wash media elements **112** flex to accommodate vehicle surface contours, a portion of the backing member **110** may flex outwardly (away from the vehicle treatment area) with respect to a reference plane defined by the backing member **110,** while the reminder of the backing member **110** may still reside in the plane such that other wash media elements **112** still may contact a vehicle. The displaced portion can then return to the plane. According to one aspect, the backing member **110** may be formed of ethylene vinyl acetate ("EVA") material. It will be appreciated that the backing member **110** can be formed of a variety of other suitable materials, including polyethylene foam. According to a still further aspect, the backing member **110** may be formed from a variety of suitable processes, including vacuum forming.

As shown, the backing member **110** may be configured in the shape of a generally circular disk and may have a generally planar configuration. However, the backing member **110** may have a variety of different shapes and may have other orientations, such as curved or non-planar. According to one aspect, the backing member **110** may have a generally convex shape such that the outer periphery **114** of the backing member **110** is disposed further away from the vehicle treatment area than a middle portion **116** of the backing member **110**. According to another aspect, the backing member **110** could have a concave shape. According to another example, the backing member **110** may be configured with spaced apart spokes like a wagon wheel with a discontinuous outer periphery. Additionally, the backing member **110** may have a variety of different sizes and thicknesses.

According to another aspect, the plurality of media elements **112** are secured to the backing member **110** such that they rotate therewith. As shown, according to one aspect, the backing member **110** may have a plurality of openings formed therein (not shown) such that each of the media elements **112** may be threaded or woven through a respective one of the plurality of openings to secure it to the backing member **110**. According to an aspect, the media elements **112** each extend outward from the backing member **110**. The media elements may be configured and attached to the backing member **110** as shown and disclosed specifically in Applicant's co-pending application Serial No. 14/327,744. It will be appreciated that the plurality of media elements **112** could be secured to the backing member **110** in a variety of different ways.

According to a further aspect, the media elements **112** may be configured such that they are substantially self-supporting along their length and remain oriented substantially perpendicular to the backing member **110** during operation. In other words, according to an aspect, the media elements **112** may be constructed so as to retain their shape during rest and operation such that they do not sag or droop. According to this aspect, because the media elements **112** are self-supporting, they can exert a consistent pressure on the vehicle surface and make contact at more or less predetermined locations, regardless of the brush's rotational speed. This can provide more effective cleaning of the vehicle exterior. According to an aspect, the media elements **112** may be formed of a non-marring material that will not damage a painted exterior surface, such as a foam material, including an EVA. However, it will be appreciated that a variety of other suitable materials may be employed to form the media elements that will not scratch, mar or otherwise damage a painted surface of a vehicle. For example, instead of foam, a synthetic material may be employed such as is employed with plastic bristles. One of ordinary skill will understand that the media elements alternatively may be configured as bristles. According to an aspect as shown, the backing member **110** may be secured to the front face **100** of the nozzle adapter **72** such that the spray nozzles **104** are fully exposed. This can be accomplished by having a central opening **118** formed in backing member **110.** Alternatively, the backing member **110** may include a protector **119** adjacent the central opening **118** that may be disposed over at least a portion of the spray nozzles **104** to provide protection therefore.

According to another aspect, the wash media elements 112 may be secured to the backing member **110** such that they encircle or surround the plurality of nozzles **104.** According to the invention, the wash media elements **112** are secured to the backing member **110** in a pattern such that one or more pockets **120** are formed amongst the wash media elements **112,** but exit the pocket and contact a vehicle exterior. As shown, the pockets **120** are areas of the backing member **110** that do not have wash media elements **112** attached. According to an aspect, the pockets **120** may be disposed in areas of the backing member **110** between adjacent wash media elements **112** and corresponding to the direction of angle of the spray nozzles **104.** As will be appreciated, the absence of the wash media elements **112** in the pockets **120** can allow high pressure fluid to be emitted from the nozzles **104** away from the axis of rotation A at an angle without contacting surrounding wash media elements **112**. By this configuration, a wider spray of high velocity fluid resulting from three separate high pressure streams **122, 124**, **126** may be achieved. According to an aspect, the angle at which the spray nozzles **104** can direct fluid may vary. It will be appreciated that the spray nozzles **104** may be angled to direct fluid in a spray pattern to direct fluid onto the spokes of the wheel. According to an aspect, the size of the pockets **120** can vary depending upon the direction of the spray nozzles **104.** According to the invention, the nozzles **104** are configured such that they are angled to direct fluid outwardly away from the axis of rotation or centerline C_{L} and toward the outer periphery **114** of the backing member **110**.

According to an aspect, the plurality of pockets **120** are fully bounded by wash media elements **112.** This configuration can ensure that when the wash media elements **112** engage an exterior of the vehicle, the fluid emitted from the plurality of spray nozzles **104** will remain within the envelope of the plurality of pockets **120** between the wash media elements **112** and the vehicle exterior. By this configuration, the fluid emitted from the plurality of spray nozzles **104** is self-contained within the pockets **120** and will minimize the amount of fluid that travels to unwanted places within the vehicle wash facility. According to a further aspect, the wash media elements **112** can by utilized to set the depth of the spray nozzles **104** from the surface which they are intended to clean. According to an aspect, this can ensure that the nozzles **104** can be close enough to the vehicle surface to direct a high pressure fluid for cleaning purposes, but also ensures that the nozzles **104** do cannot contact the vehicle surface, which can cause significant damage to the vehicle.

According to an aspect, the brush assembly **10** can provide multi-directional cleaning on a vehicle exterior. Multi-directional cleaning allows the media elements **112** of the brush assembly **10** to engage a vehicle surface in multiple different directions to provide more effective cleaning capabilities in order to remove more dirt and debris from an exterior vehicle surface as compared to a brush yielding only single direction cleaning. According to an aspect, as the backing member **110** rotates in a clockwise direction, the media elements **112** on a rearward half of the brush assembly **10** can engage the vehicle exterior in a downward direction. At the same time, the media elements **112** on a forward half of the brush assembly **10** can engage the vehicle exterior in an upward direction. Thus, as the brush assembly **10** travels along the vehicle surface (due to movement of the brush assembly **10** with respect to the vehicle or movement of the vehicle with respect to the brush assembly **10**) the same portion of the vehicle exterior can be subject to cleaning in both an upward and downward direction to provide more effective cleaning.

With reference to FIGs 1 through 5, an operation of the disclosed assembly in accordance with an aspect is discussed. As shown, a rotary brush assembly **10** may be disclosed on either side of the vehicle treatment area **12**. According to an aspect, the rotary brush assembly **10** on one side of the vehicle treatment area **12** may contact one side of the vehicle **14** while the rotary brush assembly **10** on the other side of the vehicle treatment area **12** may contact the other side of the vehicle **14**.

According to an aspect as shown in FIG 1, each of the assemblies **10** is disposed in a second position where they extend into the vehicle treatment area **12,** for engaging a vehicle. As discussed above, the assemblies **10** can be moved to a second position disposed away from the vehicle treatment area **14** and away from a car engaging position. According to an aspect, the controller **30** can direct that the assemblies be moved to the first position due to the sensed approach of the vehicle **14**. It will be appreciated that the controller 30 can be in communication with a variety of sensors to receive inputs regarding the location of the vehicle to control the location of the assemblies **10** as well as other components that are part of the wash system. As shown, according to an aspect, the location of the vehicle **14** has not caused the controller **30** to begin rotation of the assemblies or to allow fluid to be emitted from the spray nozzles **104**. It will be appreciated that the flow of fluid through the spray nozzles **104** can be controlled by a series of valves.

According to another aspect, the treatment portion **24** may be angled (pivoted about a vertical axis) such that the first brush assembly **44** is disposed closer to the vehicle treatment area **12** than the second brush assembly **46.** In other words, the treatment portion **24** may be biased to an angle with respect to the vehicle treatment area **12**. By this configuration, a plane defined by the brush backing members **110** may be oriented at an angle with respect to the vehicle treatment area **12** and thus the exterior surface of the vehicle. It will be appreciated that the angle at which the treatment portion **24** can be biased may vary. According to one aspect, the angle of bias or pivot may be between 20 and 40 degrees with respect to the vehicle treatment area **12.** This configuration can also allow the rotary brush assemblies **10** to provide a high pressure fluid spray onto the front vehicle surface as the vehicle **12** is approaching. While the treatment portion **24** can be biased to a particular angle, the angle can change when it engages a vehicle surface.

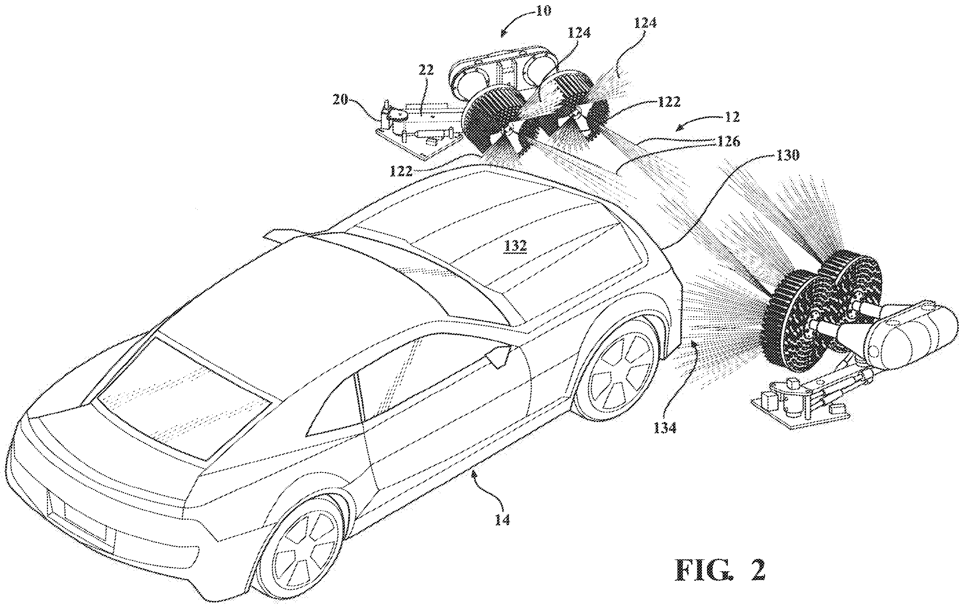

According to an aspect shown in FIG 2, the controller **30** has sensed the approach of the vehicle **14** and turned on the spray nozzles **104.** According to an aspect, the controller **30** can also signal the motor portions **76** in order to effectuate rotation of the first brush portion **44** and the second brush assembly **46** about an axis of rotation at the same time the nozzles **104** are turned on. As the vehicle approaches, each of the brush assemblies **10**, the high pressure streams **122, 124, 126** can engage the front portion **130,** hood **132,** and side portions **124** of the vehicle **14** because of the angle at which the treatment portion **24** is angled.

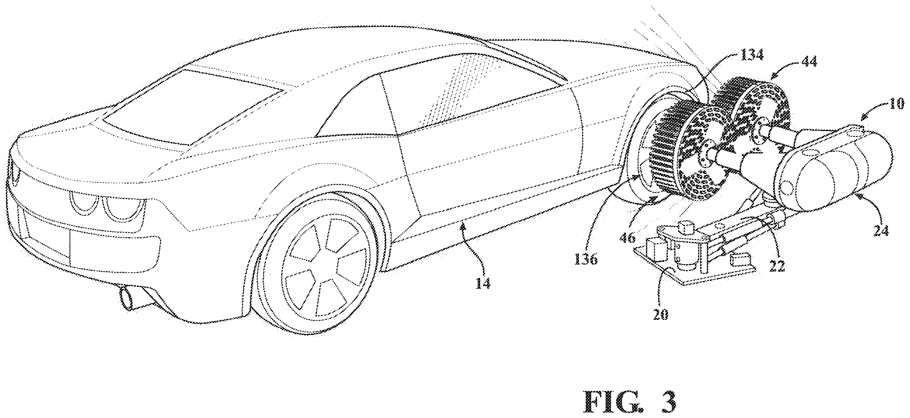

As shown in FIG 3, as the vehicle **14** continues to travel forward through the vehicle treatment area **12,** the second brush assembly **46** and its wash media elements **112** contact the exterior surface of the vehicle **14** as well as the vehicle wheel **136.** According to an aspect, the high pressure streams **122, 124**, **126** emitted from the second brush assembly **46** may be directed on the front side portions **130** of the vehicle **14** and the vehicle wheels **136.** As shown, in this configuration, the first brush assembly **44** may not be contacting the vehicle **14** and the high pressure streams **122**, **124, 126** may be emitting fluid in a wider spray pattern, including onto the front portion **130.** As shown, when the second brush assembly **46** engages the vehicle **14,** the treatment portion **24** can pivot or rotate away from its biased starting position to an orientation where it is oriented generally parallel to a vehicle exterior.

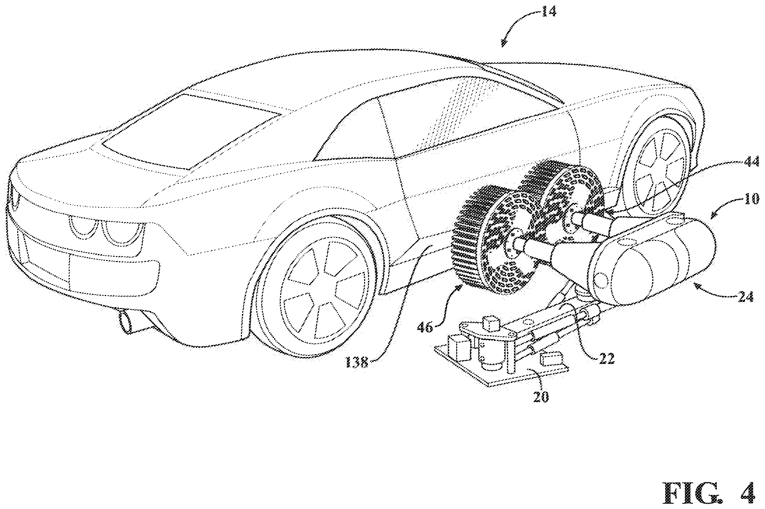

With reference to FIG 4, as the vehicle **14** has continued to move forward through the vehicle treatment area **12,** both the first brush assembly **44** and the second brush assembly **46** may be in engagement with the rocker panel of the vehicle **14.** In this configuration, the first and second brush assemblies **44, 46** may be rotating and the wash media elements **112** of each brush assembly **44, 46** can directly contact the side portions **138** of vehicle exterior. Additionally, the high pressure streams **122**, **124, 126** are being directed onto the vehicle exterior at close range. The high application of high pressure fluid to the vehicle can assist with removing dirt, particularly dirt that is known to be tough to remove in prior wash systems, including on wheels and lower portions of a vehicle exterior, such as rocker panels.

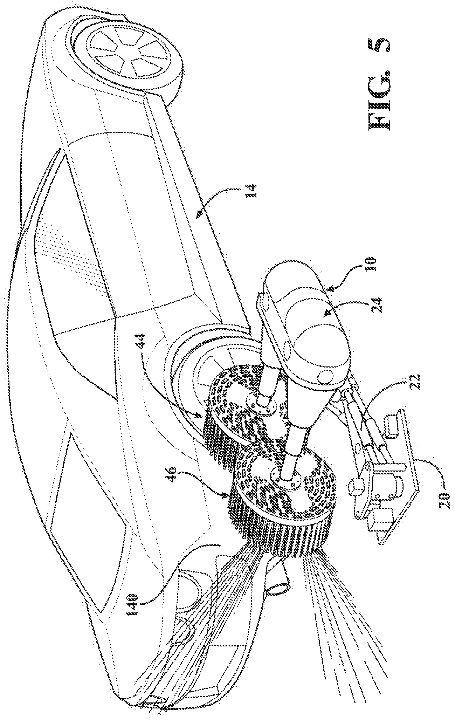

According to an aspect and as exemplarily shown in FIG 5, as the vehicle **14** has continued forward through the vehicle treatment area **12,** both the first brush assembly **44** and the second brush assembly **46** may be disposed near the rear portion of the vehicle **14** and are treating the rear lower portion **140.** As shown, in this position, the second brush assembly **46** may only be in partial engagement with the exterior surface of the vehicle **14**. As shown, the first brush assembly **44** may still be in contact with the vehicle exterior to continue the cleaning process. Once the vehicle **14** has cleared the assemblies **10,** they can pivot back to their normal biased position where the treatment portion **24** is oriented at an angle with respect to the vehicle treatment area **12**.

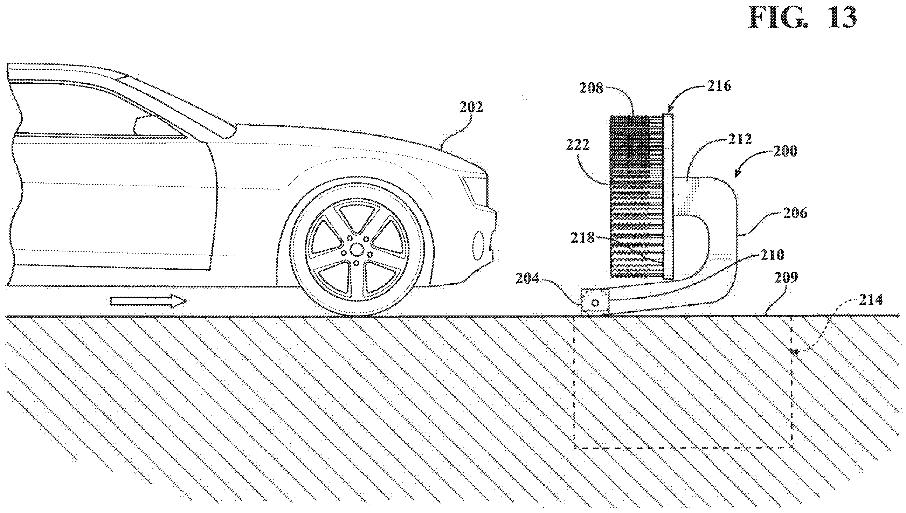

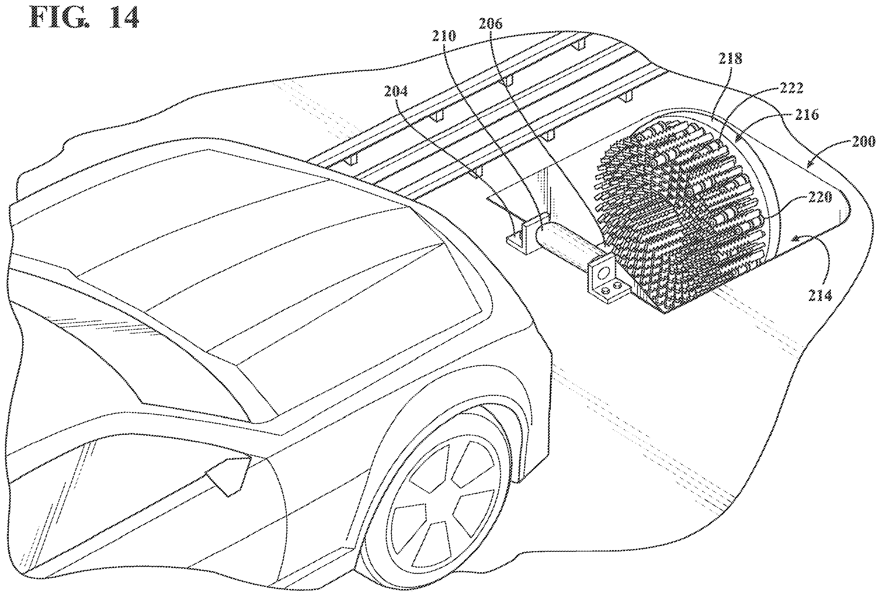

Turning now to FIGs 13 and 14, which illustrate another aspect of the present disclosure. According to an aspect, a brush assembly **200** is provided for treating an exterior painted surface of a vehicle. As shown, the brush assembly **200** may be configured to engage a front portion **202** of a vehicle, including a grill portion. As is known, it is a challenge for current vehicle wash systems to sufficiently clean vehicle grills, particularly between louvers of the grill. According to another aspect, the brush assembly **200** may also be configured to engage a rear surface of a vehicle or other surfaces.

As shown, the brush assembly **200** may include a base portion **204**, a linkage arm portion **206**, and a treatment portion **208.** According to an aspect, the base portion **204** may be configured to engage a floor **209** or other surface in a vehicle wash facility in order to support the assembly **200**. The base portion **204** may be constructed of a variety of materials, have a variety of shapes, and may be secured in a variety of ways, as discussed above. The base portion **204** may be oriented in the vehicle wash system so the treatment portion **208** can be brought into communicate with a front portion **202** of the vehicle.

According to an aspect, the linkage arm portion **202** may have a first end **210** that pivotally engages the base portion **204** and a second end **212** connected to the treatment portion **208**. According to another aspect, the assembly **200** may be in communication with a controller, which can effectuate control there over to direct its movement and operation. According to an aspect, the controller can direct movement of the linkage arm portion **208** in order to pivot the treatment portion **208** toward a first position where it is oriented generally vertical for engaging a front portion **202** of the vehicle. The controller can also retract the treatment portion **208** toward a second position where it is moved into a pit **214** beneath the vehicle treatment area to prevent engagement with a vehicle **14**. According to an aspect, the entire assembly **200** may be retracted and disposed in the pit **214** so that the vehicle can pass there over. According to an aspect, the movement of the assembly **200** may be accomplished by pivoting the linkage arm portion **200** with respect to the base portion **204.** It will also be appreciated that the assembly **200** may be moved away from the vehicle in a variety of other suitable ways. As discussed above, it will be appreciated that the controller may be configured to control other components and features within the vehicle wash system. As shown, the linkage arm portion **206** may have a generally arcuate shape. However, it can a variety of different shapes and may be constructed of a variety of different materials.

According to an aspect, the treatment portion **208** can include a brush assembly **216** that is secured to the second end **212** of the linkage arm portion **206**. The treatment portion **208** may be in communication with a source of fluid that conveys fluid to the assembly **200,** which then passes through the linkage arm portion **206**. The fluid can pass through a channel in the interior of the linkage arm portion **206**. According to an aspect, the source of fluid can be water or a combination of soap and water. It will be appreciated that a variety of other suitable fluids, including suitable chemicals may alternatively be employed with the brush assembly **200.** It will also be appreciated that more than one treatment portion may be employed as part of the brush assembly **200**. According to an aspect, the multiple treatment portions may be disposed side by side or one on top of the other.

With reference to the FIGs, the brush assembly **216** can include a backing member **218**, a plurality of spray nozzles **220** and a plurality of wash media elements **222.** According to an aspect, the backing member **218** may be formed of a soft flexible or pliable material such that it can move or flex to accommodate different vehicle contours or features during operation, such as corners, curves, tight areas and/or other complex surfaces. According to yet another aspect, the backing member **218** may be configured, as discussed above, and may be formed of the materials and by the processes discussed above. The backing member **218** may be secured to the second end **212** of the linkage arm portion **206** in a variety of other suitable ways. According to an aspect, the backing member **218** may have an elongated configuration such that it spans the width of the vehicle and can engage the entire front surface **202** of the vehicle. According to another aspect, the backing member **218** may have a width that generally matches the width of vehicle grills. The backing member **218** may be generally rectangular in shape and may be fixedly secured to the second end **212** of the linkage arm portion **206.**

According to another aspect, the plurality of media elements **222** may be secured to the backing member **218** such that they move therewith. As discussed above, the backing member **218** may have a plurality of openings formed therein (not shown) such that each of the media elements **222** may be threaded or woven through a respective one of the plurality of openings to secure it to the backing member **218**. According to an aspect, the media elements **222** can ach extend outward from the backing member **218**. It will be appreciated that the plurality of media elements **222** could be secured to the backing member **218** in a variety of different ways. According to a further aspect, the media elements **222** may be configured such that they are substantially self-supporting along their length and remain oriented substantially perpendicular to the backing member **218**.

According to an aspect as shown, the brush assembly **200** can include a plurality of spray nozzles **220** that are in communication with the source of fluid so as to emit high pressure fluid onto the vehicle. According to another aspect, the plurality of spray nozzles **220** may be disposed on or in communication with the backing member **218** such that they are located in voids or pockets **224** between the plurality of media elements **222**. Put another way, the wash media elements **222** may fully encircle the plurality of nozzles **220** such that when the wash media elements **222** engage the vehicle exterior, the fluid emitted from the plurality of nozzles **220** remains substantially enclosed within the pockets. It will be appreciated that fluid may enter the grill, but the configuration of the media elements **222** minimizes the amount of water that is thrown around the vehicle wash facility. The spray nozzles **220** may be oriented at an angle away from a centerline of the brush assembly **216.** According to another aspect, the spray nozzles 220 may be oriented perpendicular to the backing member **218.** Alternatively, the spray nozzles **220** may be oriented at different angles with respect to one another to direct spray at a variety of different angles. The length and rigidity of the spray nozzles **220** can serve to regulate the depth of the spray nozzles **220** so that they may be located in close proximity to the vehicle surface to be cleaned, but prevented from contacting the vehicle to avoid damage thereto,

According to a further aspect, the backing member **218** may be configured to reciprocate side to side or up and down such that the media elements **222** may reciprocate in a brush like fashion to remove dirt from vehicle surface. According to still a further aspect, the brush portion **218** can also include a shaft portion and a motor portion such that the brush portion **218** may be configured to rotate about an axis of rotation that is oriented generally perpendicular to a front surface of the vehicle.

According to an aspect, the brush assembly **200** may be directed by the controller to move to its first or upright position as shown in FIG 13 when a vehicle is sensed to be approaching. It will be appreciated that sensors may be employed in the facility to determine a location of a vehicle within the vehicle treatment area, which sensors are in communication with the controller to provide information utilized to direct movement of the brush assembly **200.** A cylinder or other biasing device may bias the brush assembly **200** toward a vehicle to assist with the cleaning process. According to another aspect, once in the first position, the controller can direct movement of the brush potion 216 and may actuate one or more valves to allow high pressure fluid streams to be emitted from the plurality of spray nozzles **220,**

According to another aspect, as the vehicle contacts the brush assembly **200** and continues forward, the brush assembly **200** may be pushed by the vehicle such that it begins to pivots rearwardly. The brush assembly **200** may continue to be pushed rearwardly until it is pushed beneath the level of the vehicle in it its second position in the pit **214.** Alternatively, the controller can direct the brush assembly **200** to move to the second position in the pit **214** when the vehicle has moved the brush assembly **200** a certain predetermined distance rearwardly.

Note that not all of the activities described above in the general description or the examples are required, that a portion of a specific activity may not be required, and that one or more further activities may be performed in addition to those described. Still further, the orders in which activities are listed are not necessarily the order in which they are performed.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Many other embodiments may be apparent to those of skill in the art upon reviewing the disclosure. Other embodiments may be used and derived from the disclosure, such that a structural substitution, logical substitution, or another change may be made without departing from the scope of the disclosure. Accordingly, the disclosure is to be regarded as illustrative rather than restrictive.

Certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges includes each and every value within that range,

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A brush assembly for treating an exterior surface of a vehicle, comprising:
a base portion (24);
a treatment portion (24) connected to the base portion (24), the treatment portion (24) including a first brush portion (44) having a first backing member (110) and a plurality of wash media elements (112) disposed on the first backing member (110);
a movement mechanism including a controller (30) in communication with a link arm portion (22) to effectuate movement of the treatment portion (24) towards a first position where it engages with a vehicle treatment (12) and to effectuate contact between the wash media elements (112) and the vehicle exterior;
at least one spray nozzle (104) disposed adjacent the first backing member (110) of the first brush portion (44) and configured to emit fluid away from the first backing member onto the vehicle exterior;
wherein the plurality of wash media elements (112) are disposed on the first backing member (110) such that they surround the at least one spray nozzle (104) and allow a fluid stream emitted from the at least one spray nozzle (104) to pass through the wash media elements to the vehicle exterior;
whereas the treatment portion is configured to move transversely with respect to the vehicle exterior to effectuate contact of the wash media elements with the vehicle exterior.
a plurality of spray nozzles (104) disposed adjacent the first backing member (110) of the first brush portion (44), with each of the plurality of nozzles (104) configured to emit a separate fluid stream so that multiple fluid streams are emitted at an angle away from the center of the first backing member (110).
**Characterized in that**
the plurality of wash media elements is secured to the first backing member such that a plurality of pockets is formed where none of the plurality of wash media elements are disposed;
wherein the plurality of spray nozzles is configured to direct respective streams of high pressurized fluid away from the first backing member, through respective areas of the pockets and onto the vehicle such that the streams are substantially not obstructed by any of the plurality of wash media elements;
whereby the plurality of pockets are configured to entrap the fluid emitted from the plurality of spray nozzles when the plurality of media elements contact the exterior of the vehicle.

2. The assembly of claim 1, wherein the plurality of spray nozzles (104) are disposed adjacent a middle portion (116) of the first backing member (110) and located in at least one opening (118) formed in the middle portion 8116) of the first backing member (110).

3. The assembly of claim 1, wherein the treatment portion includes a second brush portion (46) having a second backing member (110) and a plurality of wash media elements (112) disposed on the second backing member (110);
at least one spray nozzle (104) disposed adjacent the second backing member (110) of the second brush portion (46) and configured to emit fluid away from the second backing member (110) onto the vehicle exterior;
wherein the plurality of wash media elements (112) are disposed on the second backing member (110) such that they surround the at least one spray nozzle (104) and allow a fluid stream emitted from the at least one spray nozzle (104) to pass through the wash media elements (112) to the vehicle exterior.

4. The assembly of claim 3, further comprising:
a plurality of spray nozzles (104) disposed adjacent the second backing member (110), with each of the plurality of nozzles (104) configured to emit a separate fluid stream so that multiple fluid streams are emitted at an angle away from a center of the second backing member (110).

5. The assembly of claim 4, wherein the plurality of spray nozzles (104) are disposed adjacent a middle portion of the second backing member and located in at least one opening formed in the middle portion of the second backing member.

6. The assembly of claim 1, wherein the treatment portion (24) is pivotally connected to the base portion (24) and is biased at an angle with respect to a vehicle treatment area such that the first brush assembly (44) may emit high pressure fluid onto a front forward facing surface of a vehicle as the vehicle approaches.

7. The assembly of claim 1, wherein the treatment portion (24) is biased inwardly so as to engage the exterior surface of the vehicle such that the fluid stream emitted from the at least one spray nozzle (104) on the first brush assembly (44) is configured to be directed onto the exterior surface at close range.

8. The assembly of claim 1, wherein the plurality of wash media elements (112) are oriented generally parallel to a center line passing through the center of the backing member (110); and
wherein the plurality of wash media elements (112) are substantially self-supporting along their length.

9. The assembly of claim 1, wherein the backing member (110) is formed of a flexible material having memory properties such that it is configured to flex away from the vehicle exterior and return.

10. The assembly of claim 1
wherein a first end (26) of the link arm portion (22) is secured adjacent of the base portion (20) and the link arm member (22) is moveable between a first position for communication with a vehicle treatment area and a second position configured to be retracted from the vehicle treatment area;
wherein the first brush portion (44) is secured adjacent a second end of the link arm portion (22),
the plurality of wash media elements (112) being secured to the backing member (110) such that they define at least one spray nozzle opening (120);
the at least one spray nozzle (104) being disposed in the spray nozzle opening (120) such that a fluid stream emitted from the spray nozzle (104) is configured to travel substantially unobstructed to the vehicle surface;
whereby the plurality of wash media elements (112) are configured to allow the at least one spray nozzle (104) to be located in close proximity to a vehicle surface while preventing the spray nozzles (104) from contacting the vehicle surface.

11. The assembly of claim 10, wherein the first brush portion (44) is in communication with a cylinder (34) to bias the wash media elements (112) toward the vehicle surface.

12. The assembly of claim 10, wherein the plurality of media elements (112) are substantially self-supporting along their length; and
wherein the backing member (110) is formed of a flexible material having memory properties such that it is configured to flex away from the vehicle surface and return to its original position.

13. The assembly of claim 10, wherein the at least one nozzle (104) is angled toward the outer periphery of the backing member (110).

14. The assembly of claim 10, further comprising a plurality of nozzles (104) each disposed in a separate pocket (120) and wherein the plurality of pockets (120) are configured such that they contain fluid emitted from the plurality of wash media elements (112) when the wash media elements (112) engage the exterior surface of the vehicle.

## Patentansprüche

1. Bürstenanordnung zur Behandlung einer Außenfläche eines Fahrzeugs, umfassend:
einen Basisabschnitt (24);
einen Behandlungsabschnitt (24), der mit dem Basisabschnitt (24) verbunden ist, wobei der Behandlungsabschnitt (24) einen ersten Bürstenabschnitt (44) mit einem ersten Trägerelement (110) und einer Vielzahl von Waschmedienelementen (112), die auf dem ersten Trägerelement (110) angeordnet sind, einschließt;
einen Bewegungsmechanismus einschließlich einer Steuerung (30), die mit einem Verbindungsarmabschnitt (22) in Verbindung steht, um eine Bewegung des Behandlungsabschnitts (24) in Richtung einer ersten Position zu bewirken, in der er mit einer Fahrzeugbehandlung (12) in Eingriff kommt, und um einen Kontakt zwischen den Waschmedienelementen (112) und dem Fahrzeugäußeren zu bewirken;
mindestens eine Sprühdüse (104), die angrenzend an das erste Trägerelement (110) des ersten Bürstenabschnitts (44) angeordnet und konfiguriert ist, um Fluid von dem ersten Trägerelement weg auf das Fahrzeugäußere zu emittieren;
wobei die Vielzahl von Waschmedienelementen (112) auf dem ersten Trägerelement (110) so angeordnet sind, dass sie die mindestens eine Sprühdüse (104) umgeben und es einem von der mindestens einen Sprühdüse (104) emittierten Fluidstrom ermöglichen, durch die Waschmedienelemente hindurch zum Fahrzeugäußeren zu gelangen;
wobei der Behandlungsabschnitt konfiguriert ist, sich quer zum Fahrzeugäußeren zu bewegen, um den Kontakt der Waschmedienelemente mit dem Fahrzeugäußeren zu bewirken.
eine Vielzahl von Sprühdüsen (104), die angrenzend an das erste Trägerelement (110) des ersten Bürstenabschnitts (44) angeordnet sind, wobei jede der Vielzahl von Düsen (104) konfiguriert ist, um einen separaten Fluidstrom zu emittieren, so dass mehrere Fluidströme in einem Winkel weg von der Mitte des ersten Trägerelements (110) emittiert werden.
**Dadurch gekennzeichnet, dass**
die Vielzahl von Waschmedienelementen an dem ersten Trägerelement dergestalt befestigt ist, dass eine Vielzahl von Taschen gebildet wird, in denen keines der Vielzahl von Waschmedienelementen angeordnet ist;
wobei die Vielzahl von Sprühdüsen konfiguriert ist, um jeweilige Ströme eines unter hohem Druck stehenden Fluids von dem ersten Trägerelement weg durch jeweilige Bereiche der Taschen und auf das Fahrzeug dergestalt zu lenken, dass die Ströme im Wesentlichen nicht durch irgendeines der Vielzahl von Waschmedienelementen behindert werden;
wobei die Vielzahl von Taschen konfiguriert ist, um das von der Vielzahl von Sprühdüsen emittierte Fluid einzuschließen, wenn die Vielzahl von Medienelementen das Äußere des Fahrzeugs berührt.

2. Anordnung nach Anspruch 1, wobei die Vielzahl von Sprühdüsen (104) angrenzend zu einem mittleren Abschnitt (116) des ersten Trägerelements (110) angeordnet sind und sich in mindestens einer Öffnung (118) befinden, die in dem mittleren Abschnitt (116) des ersten Trägerelements (110) ausgebildet ist.

3. Anordnung nach Anspruch 1, wobei der Behandlungsabschnitt einen zweiten Bürstenabschnitt (46) mit einem zweiten Trägerelement (110) und einer Vielzahl von Waschmedienelementen (112) einschließt, die an dem zweiten Trägerelement (110) angeordnet sind;
mindestens eine Sprühdüse (104), die angrenzend an das zweite Trägerelement (110) des zweiten Bürstenabschnitts (46) angeordnet und konfiguriert ist, um Fluid von dem zweiten Trägerelement (110) weg auf das Fahrzeugäußere zu emittieren;
wobei die Vielzahl von Waschmedienelementen (112) auf dem zweiten Trägerelement (110) so angeordnet sind, dass sie die mindestens eine Sprühdüse (104) umgeben und es einem von der mindestens einen Sprühdüse (104) emittierten Fluidstrom ermöglichen, durch die Waschmedienelemente (112) hindurch zum Fahrzeugäußeren zu gelangen.

4. Anordnung nach Anspruch 3, ferner umfassend:
eine Vielzahl von Sprühdüsen (104), die angrenzend an das zweite Trägerelement (110) angeordnet sind, wobei jede der Vielzahl von Düsen (104) konfiguriert ist, um einen separaten Fluidstrom zu emittieren, so dass mehrere Fluidströme in einem Winkel weg von einer Mitte des zweiten Trägerelements (110) emittiert werden.

5. Anordnung nach Anspruch 4, wobei die Vielzahl von Sprühdüsen (104) angrenzend zu einem mittleren Abschnitt des zweiten Trägerelements angeordnet sind und sich in mindestens einer in dem mittleren Abschnitt des zweiten Trägerelements ausgebildeten Öffnung befinden.

6. Anordnung nach Anspruch 1,
wobei der Behandlungsabschnitt (24) schwenkbar mit dem Basisabschnitt (24) verbunden ist und in einem Winkel in Bezug auf einen Fahrzeugbehandlungsbereich derart vorgespannt ist, dass die erste Bürstenanordnung (44) Hochdruckfluid auf eine vordere, nach vorne weisende Oberfläche eines Fahrzeugs emittieren kann, wenn sich das Fahrzeug nähert.

7. Anordnung nach Anspruch 1, wobei der Behandlungsabschnitt (24) nach innen vorgespannt ist, um mit der Außenfläche des Fahrzeugs dergestalt in Eingriff zu kommen, dass der von der mindestens einen Sprühdüse (104) an der ersten Bürstenanordnung (44) abgegebene Fluidstrom konfiguriert wird, um auf nahe Entfernung auf die Außenfläche gerichtet zu werden.

8. Anordnung nach Anspruch 1, wobei die Vielzahl von Waschmedienelementen (112) im Allgemeinen parallel zu einer Mittellinie ausgerichtet sind, die durch die Mitte des Trägerelements (110) verläuft; und
wobei die Vielzahl von Waschmedienelementen (112) entlang ihrer Länge im Wesentlichen selbsttragend sind.

9. Anordnung nach Anspruch 1, wobei das Trägerelement (110) aus einem flexiblen Material mit Memory-Eigenschaften gebildet ist, so dass es konfiguriert ist, sich von der Fahrzeugaußenseite wegzubiegen und zurückzukehren.

10. Anordnung nach Anspruch 1
wobei ein erstes Ende (26) des Verbindungsarmabschnitts (22) angrenzend an den Basisabschnitt (20) befestigt ist und das Verbindungsarmelement (22) zwischen einer ersten Position zur Verbindung mit einem Fahrzeugbehandlungsbereich und einer zweiten Position, die konfiguriert ist, um von dem Fahrzeugbehandlungsbereich zurückgezogen zu werden, bewegbar ist;
wobei der erste Bürstenabschnitt (44) angrenzend zu einem zweiten Ende des Verbindungsarmabschnitts (22) befestigt ist, wobei die Vielzahl von Waschmedienelementen (112) an dem Trägerelement (110) so befestigt sind, dass sie mindestens eine Sprühdüsenöffnung (120) definieren;
wobei die mindestens eine Sprühdüse (104) in der Sprühdüsenöffnung (120) so angeordnet ist, dass ein von der Sprühdüse (104) abgegebener Fluidstrom konfiguriert ist, um im Wesentlichen ungehindert zur Fahrzeugoberfläche zu gelangen;
wobei die Vielzahl von Waschmedienelementen (112) konfiguriert ist, um zu ermöglichen, dass die mindestens eine Sprühdüse (104) in unmittelbarer Nähe zu einer Fahrzeugoberfläche angeordnet werden kann, während verhindert wird, dass die Sprühdüsen (104) die Fahrzeugoberfläche berühren.

11. Anordnung nach Anspruch 10, wobei der erste Bürstenabschnitt (44) mit einem Zylinder (34) in Verbindung steht, um die Waschmedienelemente (112) in Richtung der Fahrzeugoberfläche vorzuspannen.

12. Anordnung nach Anspruch 10, wobei die Vielzahl von Medienelementen (112) entlang ihrer Länge im Wesentlichen selbsttragend sind; und
wobei das Trägerelement (110) aus einem flexiblen Material mit Memory-Eigenschaften gebildet ist, so dass es konfiguriert ist, sich von der Fahrzeugoberfläche wegzubiegen und in seine ursprüngliche Position zurückzukehren.

13. Anordnung nach Anspruch 10, wobei die mindestens eine Düse (104) in Richtung des Außenumfangs des Trägerelements (110) abgewinkelt ist.

14. Anordnung nach Anspruch 10, ferner umfassend eine Vielzahl von Düsen (104), die jeweils in einer separaten Tasche (120) angeordnet sind, und wobei die Vielzahl von Taschen (120) so konfiguriert sind, dass sie Fluid enthalten, das von der Vielzahl von Waschmedienelementen (112) emittiert wird, wenn die Waschmedienelemente (112) mit der Außenfläche des Fahrzeugs in Kontakt kommen.

## Revendications

1. Un ensemble de brosses pour traiter la surface extérieure d'un véhicule, comprenant ;
une partie de l'embase (24) ;
une partie du traitement (24) attachée à une partie de l'embase (24), la partie du traitement (24) comprenant une première partie équipée de brosses (44) ayant un premier montant d'appui (110) et une pluralité d'éléments de support de lavage (112) disposée sur le premier montant d'appui (110) ;
un mécanisme de déplacement comprenant un contrôleur (30) communicant avec une partie du bras de suspension (22) afin d'effectuer un déplacement de la partie du traitement (24) vers une première position où il engage avec le traitement du véhicule (12) et pour effectuer le contact entre les éléments du support de lavage (112) et l'extérieur du véhicule ;
au moins une buse de pulvérisation (104) disposée adjacente au montant d'appui (110) de la première partie équipée de brosses (44) et configurée afin d'émettre le fluide à partir du premier montant d'appui vers l'extérieur du véhicule,
dans lequel la pluralité des éléments du support de lavage (112) est disposée sur le montant d'appui (110) de sorte qu'elle entoure ladite au moins une buse de pulvérisation (104) et permet un flux de fluide émis de ladite au moins une buse de pulvérisation (104) de passer par des éléments du support de lavage vers l'extérieur du véhicule ;
tandis que la partie du traitement est configurée pour se déplacer transversalement par rapport à l'extérieur du véhicule afin d'effectuer le contact des éléments du support de lavage avec l'extérieur du véhicule.
une pluralité de buses de pulvérisation (104) disposée adjacente au premier montant d'appui (110) de la première partie équipée de brosses (44), avec chaque pluralité de buses de pulvérisation (104) configurée pour émettre un flux séparé de fluide de sorte que de multiples flux de liquide soient émis à une inclinaison éloignée du centre du premier montant d'appui (110).
**Caractérisée en ce que**
la pluralité des éléments du support de lavage est attachée au premier montant d'appui de sorte qu'une pluralité de poches se forme où aucune des pluralités des éléments de support de lavage n'est disposée ;
dans laquelle la pluralité de buses de pulvérisation est configurée afin de diriger les flux respectifs de fluide sous haute pression loin du premier montant d'appui, via les zones respectives des poches et vers le véhicule de sorte que les flux sont essentiellement non obstrués par une des pluralités des éléments du support de lavage;
par laquelle la pluralité de poches est configurée afin de piéger le fluide émis de la pluralité de buses de pulvérisation quand la pluralité des éléments du support rentre en contact avec l'extérieur du véhicule.

2. L'ensemble de brosses de la revendication 1, dans lequel la pluralité de buses de pulvérisation (104) est disposée adjacente à une partie du milieu (116) du premier montant d'appui (110) et situé dans au moins une ouverture (118) formée dans la partie du milieu (116) du premier montant d'appui (110).

3. L'ensemble de brosses de la revendication 1, dans lequel la partie du traitement comprend une deuxième partie équipée d'une brosse (46) ayant un deuxième montant d'appui (110) et une pluralité d'éléments de support de lavage (112) disposée sur le deuxième montant d'appui (110) ;
au moins une buse de pulvérisation (104) disposée adjacente au deuxième montant d'appui (110) de la deuxième partie équipée d'une brosse (46) et configurée afin d'émettre le fluide à partir du deuxième montant d'appui (110) vers l'extérieur du véhicule;
dans lequel la pluralité des éléments du support de lavage (112) est disposée sur le deuxième montant d'appui (110) de sorte qu'elle entoure ladite au moins une buse de pulvérisation (104) et permet un flux de fluide émis de ladite au moins une buse de pulvérisation (104) de passer par les éléments du support de lavage (112) vers l'extérieur du véhicule.

4. L'ensemble de brosses de la revendication 3, comprenant en outre :
une pluralité de buses de pulvérisation (104) disposée adjacente au deuxième montant d'appui (110), avec chaque pluralité de buses (104) configurée pour émettre un flux séparé de fluide de sorte que de multiples flux de liquides soient émis à une inclinaison éloignée du centre du deuxième montant d'appui (110).

5. L'ensemble de brosses de la revendication 4, dans lequel la pluralité de buses de pulvérisation (104) est disposée adjacente à une partie du milieu du deuxième montant d'appui et située dans au moins une ouverture formée dans la partie du milieu du deuxième montant d'appui.

6. L'ensemble de brosses de la revendication 1,
dans lequel la partie du traitement (24) est connectée de manière pivotante à la partie de l'embase (24) et est inclinée à un angle par rapport à une zone de traitement du véhicule de sorte que le premier ensemble de brosses (44) peut émettre un fluide sous haute pression sur une surface d'un véhicule orientée vers l'avant lorsque le véhicule s'approche.

7. L'ensemble de brosses de la revendication 1, dans lequel la partie du traitement (24) est inclinée vers l'intérieur de manière à engager la surface extérieure du véhicule de telle sorte que le flux de fluide émis par ladite au moins une buse de pulvérisation (104) sur le premier ensemble de brosses (44) est configurée afin d'être dirigée vers la surface extérieure à distance rapprochée.

8. L'ensemble de brosses de la revendication 1, dans lequel la pluralité des éléments du support de lavage (112) est orientée généralement parallèle à une ligne centrale passant par le centre du montant d'appui (110) ; et
dans lequel la pluralité des éléments du support de lavage (112) est essentiellement autonome sur toute sa longueur.

9. L'ensemble de brosses de la revendication 1, dans lequel le montant d'appui (110) est formé d'un matériau flexible ayant des propriétés de mémoire de sorte qu'il est configuré pour fléchir en s'éloignant de l'extérieur du véhicule et en revenant.

10. L'ensemble de brosses de la revendication 1,
dans lequel une première extrémité (26) de la partie du bras de suspension (22) est attachée adjacente à la partie de l'embase (20) et le bras de suspension (22) est mobile entre la première position de communication avec la zone de traitement du véhicule et une deuxième position configurée pour être rétractée de la zone de traitement du véhicule ;
dans lequel la première partie équipée de brosses (44) est attachée adjacente à une deuxième extrémité de la partie du bras de suspension (22), la pluralité des éléments du support de lavage (112) étant attachée au montant d'appui (110) de sorte qu'elle définit au moins une ouverture de buse de pulvérisation (120) ;
ladite au moins une buse de pulvérisation (104) étant disposée dans l'ouverture de la buse de pulvérisation (120) de sorte qu'un flux de fluide émis de la buse de pulvérisation (104) est configuré pour se déplacer essentiellement sans entrave vers la surface du véhicule ;
dans lequel la pluralité des éléments du support de lavage (112) est configurée pour permettre ladite au moins une buse de pulvérisation (104) de se situer à proximité d'une surface de véhicule tout en évitant que les buse de pulvérisation (104) rentrent en contact avec la surface du véhicule.

11. L'ensemble de brosses de la revendication 10, dans lequel la première portion équipée de brosses (44) est en communication avec un cylindre (34) afin d'incliner les éléments du support de lavage (112) vers la surface du véhicule.

12. L'ensemble de brosses de la revendication 10, dans lequel la pluralité des éléments du support (112) est essentiellement autonome sur toute sa longueur ; et
dans lequel le montant d'appui (110) est formé d'un matériau flexible ayant des propriétés de mémoire de sorte qu'il est configuré pour fléchir en s'éloignant de la surface du véhicule et en revenant à sa position initiale.

13. L'ensemble de brosses de la revendication 10, dans lequel ladite au moins une buse (104) est inclinée vers la périphérie externe du montant d'appui (110).

14. L'ensemble de brosses de la revendication 10, comprenant en outre une pluralité de buses (104) chacune disposée dans une poche séparée (120) et dans lequel la pluralité de poches (120) est configurée de sorte qu'elle contient le fluide émis de la pluralité des éléments du support de lavage (112) quand les éléments du support de lavage (112) engagent la surface extérieure du véhicule.
